# EUROPEAN PATENT APPLICATION

(11) **EP 4 586 214 A1**
(43) Date of publication of application: **16.07.2025**
(21) Application number: 23876628.1
(22) Date of filing: 08.10.2023
(51) Int. Cl.: G06V 10/774

(54) **SAMPLE PROCESSING METHOD AND APPARATUS, COMPUTING DEVICE, AND COMPUTER-READABLE STORAGE MEDIUM**

(30) Priority: 12.10.2022 CN 202211248960
(71) Applicant: Huawei Technologies Co., Ltd., Shenzhen, Guangdong 518129 (CN)
(72) Inventor: LUO, Wentao, Shenzhen, Guangdong 518129 (CN); WANG, Yaoyuan, Shenzhen, Guangdong 518129 (CN); ZHANG, Ziyang, Shenzhen, Guangdong 518129 (CN); LI, Jiawei, Shenzhen, Guangdong 518129 (CN); YOU, Kaichao, Shenzhen, Guangdong 518129 (CN); LOU, Yihang, Shenzhen, Guangdong 518129 (CN); ZHANG, Jingyi, Shenzhen, Guangdong 518129 (CN); YU, Chen, Shenzhen, Guangdong 518129 (CN)
(74) Representative: Grünecker Patent- und Rechtsanwälte PartG mbB
(86) International application number: PCT/CN2023/123443
(87) International publication number: WO 2024/078426

(57) **Abstract**

Embodiments of this disclosure provide a sample processing method and apparatus, a computing device, and a computer-readable storage medium. The method includes: obtaining a positive sample image; obtaining, based on the positive sample image, an anomaly labeling mask map corresponding to the positive sample image; and generating a forged negative sample image based on the positive sample image and the anomaly labeling mask map, where an anomaly region in the forged negative sample image corresponds to an anomaly labeling region in the anomaly labeling mask map. **In** this way, a large quantity of forged negative sample images can be automatically generated, to provide sufficient sample datasets for task detection in a scenario with scarce samples, thereby improving an automatic detection capability and accuracy of an anomaly detection system.

## Description

This application claims priority to Chinese Patent Application No. 202211248960.0, filed with the China National Intellectual Property Administration on October 12, 2022 and entitled "SAMPLE PROCESSING METHOD AND APPARATUS, COMPUTING DEVICE, AND COMPUTER-READABLE STORAGE MEDIUM", which is incorporated herein by reference in its entirety.

### TECHNICAL FIELD

This disclosure relates to the field of artificial intelligence, and more specifically, to a sample processing method and apparatus, a computing device, and a computer-readable storage medium.

### BACKGROUND

In the fields such as manufacturing and medical testing, there are a large quantity of tasks that need to be detected. For example, in the manufacturing field, there is a part defect detection task, and in the medical testing field, there is a disease detection task. However, with an increase of labor costs and expansion of detection requirements, it is difficult for limited manpower such as quality inspectors or professional doctors to undertake consecutive and high-intensity anomaly detection tasks. Therefore, using artificial intelligence models instead of manpower to complete anomaly detection tasks becomes a research hotspot.

However, millions of related images and corresponding labeled data are required for training an artificial intelligence model such as a deep neural network for an anomaly detection task. Therefore, it is difficult to train, in the fields such as manufacturing and healthcare with scarce samples and various detection scenarios, an artificial intelligence model that meets a requirement to implement an anomaly detection task. In addition, at present, labeled data is basically labeled manually. This consumes huge labor and economic costs.

### SUMMARY

Example embodiments of this disclosure provide a sample processing method. In the method, a forged negative sample image can be generated based on a positive sample image and an anomaly labeling mask map, so that a large quantity of forged negative sample images can be automatically generated, to provide sufficient sample datasets for task detection in a scenario with scarce samples, thereby improving an automatic detection capability and accuracy.

According to a first aspect, a sample processing method is provided. The method includes: obtaining a positive sample image; obtaining, based on the positive sample image, an anomaly labeling mask map corresponding to the positive sample image; and generating a forged negative sample image based on the positive sample image and the anomaly labeling mask map, where an anomaly region in the forged negative sample image corresponds to an anomaly labeling region in the anomaly labeling mask map.

Therefore, in embodiments of this disclosure, the forged negative sample image is generated based on the positive sample image and the anomaly labeling mask map. Therefore, sufficient sample datasets can be provided for training an artificial intelligence model (for example, an anomaly detection model) used to perform an anomaly detection task in a scenario with scarce samples, to improve accuracy of anomaly detection performed by the artificial intelligence model, and resolve an overfitting problem caused by sample scarcity.

**In** some embodiments of the first aspect, the method further includes: training an anomaly detection system based on the generated forged negative sample image and the corresponding anomaly labeling mask map. Therefore, the anomaly detection system is trained based on the forged negative sample image and the corresponding anomaly labeling mask map, so that a generalization capability of the anomaly detection system can be improved, the overfitting problem caused by the sample scarcity can be further resolved, and detection accuracy of the anomaly detection system can be further improved.

In some embodiments of the first aspect, the anomaly detection system is configured to detect and label an anomaly in a to-be-detected image. In this way, anomaly detection can be implemented without manual intervention. In addition, the trained anomaly detection system not only can automatically and accurately detect the anomaly in the to-be-detected image, but also can be used to label the anomaly region in the negative sample image, so that the anomaly detection system can label an anomaly in negative sample data as an automatic labeling system of the negative sample data. This greatly reduces labor costs of manual labeling.

In some embodiments of the first aspect, detecting and labeling the anomaly in the to-be-detected image include: receiving the to-be-detected image; generating, by a positive sample generator in the anomaly detection system, an intermediate positive sample image based on the received to-be-detected image; stitching the to-be-detected image and the intermediate positive sample image, to generate a stitched image; and generating, by a labeler based on the stitched image, an anomaly labeling map corresponding to the to-be-detected image. Therefore, the trained anomaly detection system can detect and label the anomaly in the to-be-detected image. In addition, because the anomaly detection system may label the anomaly in the to-be-detected image, the anomaly detection system can label the negative sample image as a negative sample labeling system. This can greatly reduce labor costs of manual labeling.

In some embodiments of the first aspect, the forged negative sample image is generated by a negative sample generator, and both the negative sample generator and the positive sample generator are obtained through training based on a positive sample training image, a negative sample training image, and an anomaly labeling mask training map. Therefore, the negative sample generator and the positive sample generator are trained by using a same training dataset, so that a training difficulty and training costs of the anomaly detection system can be reduced, and anomaly detection accuracy of the anomaly detection system can be further improved.

In some embodiments of the first aspect, the negative sample generator and the positive sample generator are obtained through training in the following manners: generating, by the negative sample generator based on the positive sample training image and the anomaly labeling mask training map, a negative sample image output through training; generating, by the positive sample generator based on the negative sample image output through training, a positive sample image output through training; determining a reconstruction loss function based on the positive sample training image and the positive sample image output through training; determining an adversarial loss function based on the negative sample training image and the negative sample image output through training; and training the negative sample generator and the positive sample generator based on the reconstruction loss function and the adversarial loss function. Therefore, the positive sample generator in the anomaly detection system and the negative sample generator are trained based on the positive sample training image, the negative sample training image, and the anomaly labeling mask training map, so that a capability of forging a negative sample image by the negative sample generator can be improved, and the training costs and the training difficulty of the anomaly detection system can also be reduced.

In some embodiments of the first aspect, the determining an adversarial loss function includes: inputting the negative sample training image and the negative sample image output through training to a discriminator; and determining, by the discriminator, the adversarial loss function. Therefore, a discriminator-based adversarial network is used, so that the capability of forging the negative sample image by the negative sample generator can be improved, and a forged negative sample image closer to a real negative sample can be generated.

In some embodiments of the first aspect, the training the negative sample generator and the positive sample generator includes: training the negative sample generator, the positive sample generator, and the discriminator based on the reconstruction loss function and the adversarial loss function. Therefore, the training difficulty and the training costs of the anomaly detection system can be reduced, and the anomaly detection accuracy of the anomaly detection system can be further improved.

In some embodiments of the first aspect, the obtaining an anomaly labeling mask map includes: generating, by a random noise generator, a random mask map based on the positive sample image; obtaining a location guide mask map; and performing point multiplication processing on the random mask map and the location guide mask map, to obtain the anomaly labeling mask map. Therefore, negative sample images with anomalies of various shapes, sizes, and locations can be randomly simulated by obtaining the anomaly labeling mask map. This improves diversity of the negative sample data, and further improves the generalization capability and the anomaly detection accuracy of the anomaly detection system.

In some embodiments of the first aspect, the generating, by a random noise generator, a random mask map includes: randomly generating a corresponding pixel value for at least one pixel in the positive sample image, to obtain a numerical mask map; setting a pixel value that is in the numerical mask map and that is greater than a pixel threshold to a first pixel value; setting a pixel value that is in the numerical mask map and that is less than the pixel threshold to a second pixel value; and generating the random mask map based on the numerical mask map with an updated pixel value. Therefore, generating the random mask map helps randomly simulate a negative sample image with anomalies of various shapes and sizes. This improves diversity of the negative sample data, and further improves the generalization capability and the anomaly detection accuracy of the anomaly detection system.

In some embodiments of the first aspect, the random noise generator includes a Perlin noise generator or a Gaussian noise generator.

In some embodiments of the first aspect, in the location guide mask map, a region including a first pixel value is a region in which an anomaly is guided. Therefore, the anomaly in the forged negative sample image can be guided to a region with a high anomaly occurrence probability based on the location guide mask map and based on an actual characteristic and status of an anomaly detection task to which the anomaly detection system is applied. This further improves authenticity of the forged negative sample image.

In some embodiments of the first aspect, the method further includes: obtaining a texture image; performing point multiplication processing on the anomaly labeling mask map and the texture image, to obtain a random texture image; obtaining a complementary image of the location guide mask map; performing point multiplication processing on the complementary image and the positive sample image, to obtain an updated positive sample image; and performing addition processing on the random texture image and the updated positive sample image, to obtain a primary forged negative sample image. The primary forged negative sample image can be obtained based on the texture image and the anomaly labeling mask map. Because the texture image is used, the primary forged negative sample image may include anomalies of various textures, colors, shapes, sizes, and the like. This improves the diversity of the negative sample data, and further improves the generalization capability and the anomaly detection accuracy of the anomaly detection system.

In some embodiments of the first aspect, the obtaining a texture image includes: obtaining an initial texture image; and performing enhancement processing on the initial texture image, to generate the texture image. Enhancement processing is performed on the initial texture image, so that definition and precision of an anomaly region in the generated primary negative sample image can be improved, efficiency of training the anomaly detection system is improved, and a trained model can implement a high-precision and pixel-level anomaly detection task.

According to a second aspect, a sample processing apparatus is provided. The apparatus includes: a first obtaining unit, configured to obtain a positive sample image; a second obtaining unit, configured to obtain, based on the positive sample image, an anomaly labeling mask map corresponding to the positive sample image; and a generation unit, configured to generate a forged negative sample image based on the positive sample image and the anomaly labeling mask map, where an anomaly region in the forged negative sample image corresponds to an anomaly labeling region in the anomaly labeling mask map.

Therefore, the sample processing apparatus provided in the second aspect of this disclosure generates a forged negative sample image based on the positive sample image and the anomaly labeling mask map. Therefore, sufficient sample datasets can be provided for training an artificial intelligence model (for example, an anomaly detection model) used to perform an anomaly detection task in a scenario with scarce samples, to improve accuracy of anomaly detection performed by the artificial intelligence model, and resolve an overfitting problem caused by sample scarcity.

In some embodiments of the second aspect, the sample processing apparatus further includes a first training unit, configured to train the anomaly detection system based on the generated forged negative sample image and the corresponding anomaly labeling mask map. Therefore, the anomaly detection system is trained based on the forged negative sample image and the corresponding anomaly labeling mask map, so that a generalization capability of the anomaly detection system can be improved, the overfitting problem caused by the sample scarcity can be further resolved, and detection accuracy of the anomaly detection system can be further improved.

In some embodiments of the second aspect, the anomaly detection system is configured to detect and label an anomaly in a to-be-detected image. In this way, anomaly detection can be implemented without manual intervention. In addition, the trained anomaly detection system not only can automatically and accurately detect the anomaly in the to-be-detected image, but also can be used to label the anomaly region in the negative sample image, so that the anomaly detection system can label an anomaly in negative sample data as an automatic labeling system of the negative sample data. This greatly reduces labor costs of manual labeling.

In some embodiments of the second aspect, that the anomaly detection system detects and labels the anomaly in the to-be-detected image includes: receiving the to-be-detected image; generating, by a positive sample generator in the anomaly detection system, an intermediate positive sample image based on the received to-be-detected image; stitching the to-be-detected image and the intermediate positive sample image, to generate a stitched image; and generating, by a labeler based on the stitched image, an anomaly labeling map corresponding to the to-be-detected image. Therefore, the trained anomaly detection system can detect and label the anomaly in the to-be-detected image. In addition, because the anomaly detection system may label the anomaly in the to-be-detected image, the anomaly detection system can label the negative sample image as a negative sample labeling system. This can greatly reduce labor costs of manual labeling.

In some embodiments of the second aspect, the forged negative sample image is generated by a negative sample generator, and the sample processing apparatus further includes a second training unit, configured to train the negative sample generator and the positive sample generator based on the positive sample training image, the negative sample training image, and the anomaly labeling mask training map. Therefore, the negative sample generator and the positive sample generator are trained by using a same training dataset, so that a training difficulty and training costs of the anomaly detection system can be reduced, and anomaly detection accuracy of the anomaly detection system can be further improved.

In some embodiments of the second aspect, the second training unit includes: a first obtaining subunit, configured to obtain a negative sample image output through training that is generated by the negative sample generator based on the positive sample training image and the anomaly labeling mask training map; a second obtaining subunit, configured to obtain a positive sample image output through training that is generated by the positive sample generator based on the negative sample image output through training; a first determining subunit, configured to determine a reconstruction loss function based on the positive sample training image and the positive sample image output through training; and a second determining subunit, configured to determine an adversarial loss function based on the negative sample training image and the negative sample image output through training; and a training subunit, configured to train the negative sample generator and the positive sample generator based on the reconstruction loss function and the adversarial loss function. Therefore, the positive sample generator in the anomaly detection system and the negative sample generator are trained based on the positive sample training image, the negative sample training image, and the anomaly labeling mask training map, so that a capability of forging a negative sample image by the negative sample generator can be improved, and training costs of a supervised learning model of the anomaly detection system can also be reduced.

In some embodiments of the second aspect, the second determining subunit is configured to: input the negative sample training image and the negative sample image output through training to a discriminator; and determine, by the discriminator, the adversarial loss function. Therefore, a discriminator-based adversarial network is used, so that the capability of forging the negative sample image by the negative sample generator can be improved, and a forged negative sample image closer to a real negative sample is generated.

In some embodiments of the second aspect, the training subunit is configured to train the negative sample generator, the positive sample generator, and the discriminator based on the reconstruction loss function and the adversarial loss function. Therefore, the training difficulty and the training costs of the anomaly detection system can be reduced, and the anomaly detection accuracy of the anomaly detection system can be further improved.

In some embodiments of the second aspect, the second obtaining unit includes: a random noise generator, configured to generate a random mask map based on the positive sample image; a third obtaining subunit, configured to obtain a location guide mask map; and a fourth obtaining subunit, configured to perform point multiplication processing on the random mask map and the location guide mask map, to obtain the anomaly labeling mask map. Therefore, negative sample images with anomalies of various shapes, sizes, and locations can be randomly simulated by obtaining the anomaly labeling mask map. This improves diversity of the negative sample data, and further improves the generalization capability and the anomaly detection accuracy of the anomaly detection system.

In some embodiments of the second aspect, the random noise generator includes: a fifth obtaining subunit, configured to randomly generate a corresponding pixel value for at least one pixel in the positive sample image, to obtain a numerical mask map; a first setting subunit, configured to set a pixel value that is in the numerical mask map and that is greater than a pixel threshold to a first pixel value; a second setting subunit, configured to set a pixel value that is in the numerical mask map and that is less than the pixel threshold to a second pixel value; and a generation subunit, configured to generate the random mask map based on the numerical mask map with an updated pixel value. Therefore, generating the random mask map helps randomly simulate a negative sample image with anomalies of various shapes and sizes. This improves diversity of the negative sample data, and further improves the generalization capability and the anomaly detection accuracy of the anomaly detection system.

In some embodiments of the second aspect, the random noise generator includes a Perlin noise generator or a Gaussian noise generator.

In some embodiments of the second aspect, in the location guide mask map, a region including a first pixel value is a region in which an anomaly is guided. Therefore, the anomaly in the forged negative sample image can be guided to a region with a high anomaly occurrence probability based on the location guide mask map and based on an actual characteristic and status of an anomaly detection task to which the anomaly detection system is applied. This further improves authenticity of the forged negative sample image.

In some embodiments of the second aspect, the apparatus further includes: a texture image obtaining unit, configured to obtain a texture image; a random texture image obtaining unit, configured to perform point multiplication processing on the anomaly labeling mask map and the texture image, to obtain a random texture image; a complementary image obtaining unit, configured to obtain a complementary image of the location guide mask map; an updated positive sample image obtaining unit, configured to perform point multiplication processing on the complementary image and the positive sample image, to obtain an updated positive sample image; and a primary forged negative sample obtaining unit, configured to perform addition processing on the random texture image and the updated positive sample image, to obtain a primary forged negative sample. The primary forged negative sample image can be obtained based on the texture image and the anomaly labeling mask map. Because the texture image is used, the primary forged negative sample image may include anomalies of various textures, colors, shapes, sizes, and the like. This improves the diversity of the negative sample data, and further improves the generalization capability and the anomaly detection accuracy of the anomaly detection system.

In some embodiments of the second aspect, the texture image obtaining unit is configured as an initial texture image obtaining subunit, configured to obtain an initial texture image; and a texture image generation subunit, configured to perform enhancement processing on the initial texture image, to generate the texture image. Enhancement processing is performed on the initial texture image, so that definition and precision of an anomaly region in the generated primary negative sample image can be improved, efficiency of training the anomaly detection system is improved, and a trained model can implement a high-precision and pixel-level anomaly detection task.

According to a third aspect, a computing device is provided, including a processor and a memory, where the memory stores instructions executed by the processor, and when the instructions are executed by the processor, the computing device is enabled to implement an operation of the method according to any one of the first aspect or embodiments of the first aspect.

According to a fourth aspect, a computer-readable storage medium is provided. The computer-readable storage medium stores a computer program, and when the computer program is executed by a processor, an operation of the method according to any one of the first aspect or embodiments of the first aspect is implemented.

According to a fifth aspect, a chip or a chip system is provided. The chip or the chip system includes a processing circuit, configured to perform an operation of the method according to any one of the first aspect or embodiments of the first aspect.

According to a sixth aspect, a computer program or a computer program product is provided. The computer program or the computer program product is tangibly stored on a computer-readable medium and includes computer-executable instructions. When the computer-executable instructions are executed, a device is enabled to implement an operation of the method according to any one of the first aspect or embodiments of the first aspect.

### BRIEF DESCRIPTION OF DRAWINGS

The foregoing and other features, advantages, and aspects of embodiments of this disclosure become more apparent with reference to accompanying drawings and with reference to the following detailed description. In the accompanying drawings, same or similar reference numerals indicate same or similar elements.
FIG. 1 is a diagram of a scenario of a system to which an embodiment of this disclosure may be applied;
FIG. 2 is an example flowchart of a sample processing method according to an embodiment of this disclosure;
FIG. 3 is a block diagram of a system for implementing a sample processing method according to an embodiment of this disclosure;
FIG. 4 is a diagram of a process of generating an initial forged negative sample image according to an embodiment of this disclosure;
FIG. 5 is a diagram of an anomaly detection system according to an embodiment of this disclosure;
FIG. 6 is a diagram of a training process of training a positive sample generator and a negative sample generator according to an embodiment of this disclosure;
FIG. 7 is a block diagram of a sample processing apparatus according to an embodiment of this disclosure; and
FIG. 8 is a block diagram of an example device that may be used to implement an embodiment of this disclosure.

### DESCRIPTION OF EMBODIMENTS

The following describes embodiments of this disclosure in detail with reference to accompanying drawings. Although some embodiments of this disclosure are shown in the accompanying drawings, it should be understood that this disclosure can be implemented in various forms, and should not be construed as being limited to embodiments described herein. On the contrary, these embodiments are provided to thoroughly and completely understand this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Artificial intelligence (Artificial Intelligence, AI) is to simulate some thinking processes and intelligent behavior of people by using a computing device. A research history of the artificial intelligence has a natural and clear timeline from a focus of "reasoning" to a focus of "knowledge" and then to a focus of "learning". The artificial intelligence has been widely used in various industries, such as security protection, healthcare, transportation, education, finance, and industry.

Machine learning (Machine Learning) is a branch of artificial intelligence, and is to study how a computer simulates or implements human learning behavior, to obtain new knowledge or skills and reorganize existing knowledge structures, so as to continuously improve performance of the computer. That is, machine learning is to study how to improve performance of a specific algorithm in empirical learning.

Deep learning (Deep Learning) is a type of machine learning technology based on a deep neural network algorithm. A main feature of deep learning is to process and analyze data by using a structure with multiple nonlinear transformations. Deep learning is mainly used in scenarios such as perception and decision-making in the field of artificial intelligence, such as image and speech recognition, image detection, natural language translation, and computer games.

Self-supervised learning (self-supervised learning) is a method for mining a large amount of its own information from unsupervised data via an auxiliary task, and using the information as a supervised signal.

Prior knowledge (prior knowledge) is knowledge that is obtained without experience or before experience. In the machine learning field, the prior knowledge is knowledge that is manually added to a model, or knowledge that is not obtained by a model.

In this disclosure, a positive sample is a normal defect-free sample, and is used to train an artificial intelligence model.

A negative sample is opposite to a positive sample. In this disclosure, a sample with an anomaly or a defect is defined as a negative sample, and may also be used to train an artificial intelligence model.

In the fields such as manufacturing and medical testing, there are a large quantity of tasks that need to be detected. For example, in the manufacturing field, there is a part defect detection task, and in the medical testing field, there is a disease detection task. However, with an increase of labor costs and expansion of detection requirements, it is difficult for limited manpower such as quality inspectors or professional doctors to undertake consecutive and high-intensity anomaly detection tasks. Therefore, using artificial intelligence models instead of manpower to complete anomaly detection tasks becomes a research hotspot.

A large quantity of negative sample datasets and corresponding labels need to be collected, to train an artificial intelligence model to replace manpower to complete anomaly detection. However, in automatic detection fields such as industrial quality inspection and medical diagnosis, a quantity of negative sample images is small, and a probability of occurrence of some negative sample images is extremely low. If sample datasets are insufficient, a trained model has an overfitting problem. In addition, each negative sample image mainly relies on manual pixel-level labeling. Therefore, collecting and labeling a large quantity of negative sample images will consume huge labor and economic costs.

Currently, a limited training capability of limited sample datasets for a model is mainly compensated by using a data enhancement method. In an existing data enhancement method, an existing sample dataset is mainly operated and changed, to generate a sample dataset that is not exactly the same as but similar to an existing sample dataset, so as to increase a quantity of training sample datasets. The existing data enhancement method mainly includes physical enhancement and noise enhancement. Physical enhancement of image data includes rotation, cropping, color change, scaling, mirroring, translation, and the like for sample images, to increase a quantity of sample images. However, the physical enhancement method cannot greatly improve performance of the negative sample image. Noise enhancement is to construct a new sample dataset by applying noise to an original sample image or mixing a plurality of sample images. However, an amount of sample data enhanced by using the noise enhancement method is limited and effect is not significant. In addition, for a scenario of an anomaly detection task, randomly rotating a positive sample image or adding noise to the positive sample image is likely to change the positive sample image into a negative sample image. Therefore, it is difficult to significantly increase an amount of valid data of a positive sample or a negative sample through physical enhancement or noise enhancement, and negative impact on a sample dataset may be caused by uncontrollable enhancement. In addition, the anomaly detection task may be understood as an image segmentation task rather than a classification task. Therefore, when original sample image data is enhanced, labeling information corresponding to a sample image is further required to complete a complete data construction task. It can be learned that although the existing data enhancement method can enhance an image, it is difficult to greatly improve performance of a negative sample, and required labeling still needs to be manually completed. When an amount of data is excessively large, labor costs are unaffordable.

In view of this, embodiments of this disclosure provide a sample processing method. In this method, a forged negative sample image is generated based on a positive sample image and an anomaly labeling mask map. Therefore, sufficient sample datasets can be provided for training an artificial intelligence model used to perform an anomaly detection task in a scenario with scarce samples, to improve accuracy of anomaly detection performed by the artificial intelligence model, and resolve an overfitting problem caused by sample scarcity.

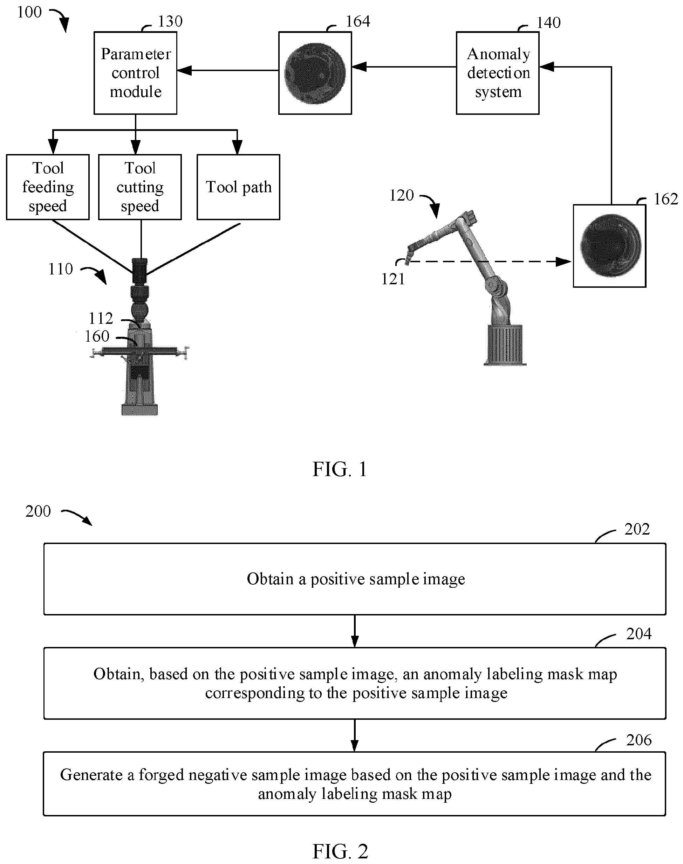

FIG. 1 is a diagram of a scenario of a system 100 to which an embodiment of this disclosure may be applied. In FIG. 1, the system 100 in a processing and manufacturing scenario is used as an example for description. The system 100 in FIG. 1 includes a manufacturing and processing center 110 and a manipulator 120. The manufacturing and processing center 110 includes a cutting tool 112 for cutting a workpiece 160. An industrial camera 121 is attached to the manipulator 120, and is configured to capture status information of a surface of the workpiece 160 in a process of processing the workpiece 160. The captured status information may be represented in a form of an image, as shown in an image 162 of a workpiece surface in FIG. 1.

The system 100 further includes an anomaly detection model 140 according to this embodiment of this disclosure. The anomaly detection model 140 may receive the image 162 captured by the industrial camera 121, and perform anomaly detection on the image 162, to detect whether there is an anomaly such as a workpiece crack or another defect on the workpiece surface corresponding to the image 162. The image 162 shown in FIG. 1 corresponds to an image with an anomaly. Correspondingly, the anomaly detection model 160 may detect the anomaly, and output an anomaly mask map 164 in which the anomaly is labeled.

The system 100 may further include a parameter control module 130. The parameter control module 130 receives the anomaly mask map 164, and adjusts, based on the received anomaly mask map 164, one or more of parameters such as a tool feeding speed parameter, a tool cutting speed, and a tool path, to control a process of processing the workpiece 160 by the cutting tool 112 in the manufacturing and processing center 110, so that the processing process of the workpiece 160 can be optimized, to avoid generation of a larger defect.

The anomaly detection model in this embodiment of this disclosure can effectively resolve anomaly data that is difficult to find or has a low occurrence probability but that is very important in the industrial field. Therefore, anomaly detection has a high generalization capability and high accuracy. The anomaly detection model in this embodiment of this disclosure can have a high detection rate for a new anomaly shape in a factory without retraining. Compared with an unsupervised model, in this embodiment, it is more robust to distinguish anomalies by learning normal distribution, and different detection requirements can be flexibly met.

It may be understood that although the processing and manufacturing scenario is used as an example in FIG. 1 for description, the sample processing method and the anomaly detection model in embodiments of this disclosure are applicable to another scenario with scarce negative samples, for example, the automatic detection field such as medical diagnosis, to detect an anomaly. According to the sample processing method in embodiments of this disclosure, a forged negative sample image is generated based on a positive sample image and an anomaly labeling mask map. Therefore, sufficient training sample datasets can be provided for training an artificial intelligence model (for example, the anomaly detection system 140 shown in FIG. 1) used to perform an anomaly detection task in a scenario with scarce samples, to improve accuracy of anomaly detection performed by the artificial intelligence model, resolve an overfitting problem caused by sample scarcity, and further effectively improve a generalization capability of the model.

It may be understood that the anomaly detection system 140 in the system 100 shown in FIG. 1 may be a software system, a hardware system, or a system combining software and hardware. In some examples, the anomaly detection system 140 may be implemented as a computing device or a part of the computing device. The computing device includes but is not limited to a desktop computer, a mobile terminal, a smart home device, a wearable device, a server, a cloud server, and the like. The anomaly detection system 140 may be deployed in at least one of a cloud environment and a local computing device. In an example, the anomaly detection system 140 is deployed in the cloud environment. In another example, the anomaly detection system 140 may be deployed in the local computing device.

In addition, the parameter control module 130 in the system 100 shown in FIG. 1 may be a software system, a hardware system, or a system combining software and hardware. In some examples, the parameter control module 130 may be implemented as a computing device or a part of the computing device. The computing device includes but is not limited to a desktop computer, a mobile terminal, a smart home device, a wearable device, a server, a cloud server, and the like. The parameter control module 130 may be deployed in at least one of a cloud environment and a local computing device. In an example, the parameter control module 130 is deployed in the cloud environment. In another example, the parameter control module 130 may be deployed in the local computing device. In addition, in some embodiments, the parameter control module 130 and the anomaly detection model 140 may be deployed in a same device. In some embodiments, the parameter control module 130 and the anomaly detection model 140 may be deployed in different devices. Deployment of the parameter control module 130 and the anomaly detection model 140 is not limited in this disclosure. In an actual application, the parameter control module 130 and the anomaly detection model 140 may be adaptively deployed based on a computing capability of the computing device, a resource occupation status of the cloud environment, an actual requirement, or the like.

FIG. 2 is an example flowchart of a sample processing method 200 according to an embodiment of this disclosure. The sample processing method 200 may be performed in any suitable computing device. The computing device includes but is not limited to a desktop computer, a mobile terminal, a smart home device, a wearable device, a server, a cloud server, and the like. Although corresponding functions of the sample processing method are performed in a specific order in steps shown in FIG. 2, it may be understood that an execution order of the steps shown in FIG. 2 may be changed relative to the shown order. For example, two or more consecutively shown steps may be simultaneously performed, or some steps may be simultaneously performed. In addition, a specific step in the method 200 may be omitted. In addition, another step may be added to the flowchart in FIG. 2. It may be understood that all these changes fall within the scope of this disclosure.

In block 202, the computing device obtains a positive sample image. The positive sample image may be a sample image without an anomaly or a defect. The computing device may obtain a positive sample image in a scenario based on the scenario to which a to-be-trained artificial intelligence model (for example, an anomaly detection system) is applied. For example, in the processing and manufacturing field, the positive sample image may include an image of a workpiece surface without an anomaly. In the medical field, the positive sample image may include a healthy organ image. The computing device may obtain the positive sample image in a plurality of manners. In some embodiments, the computing device may obtain a positive sample image in real time via an image capture device (for example, a camera). In some embodiments, the computing device may receive a positive sample image prestored in another computing device or a storage apparatus. In some embodiments, the computing device may obtain a positive sample image from a known sample database. A specific manner in which the computing device obtains a positive sample image is not limited in this disclosure, and parameter information such as a specific format of a positive sample image or a quantity of positive sample images is not limited.

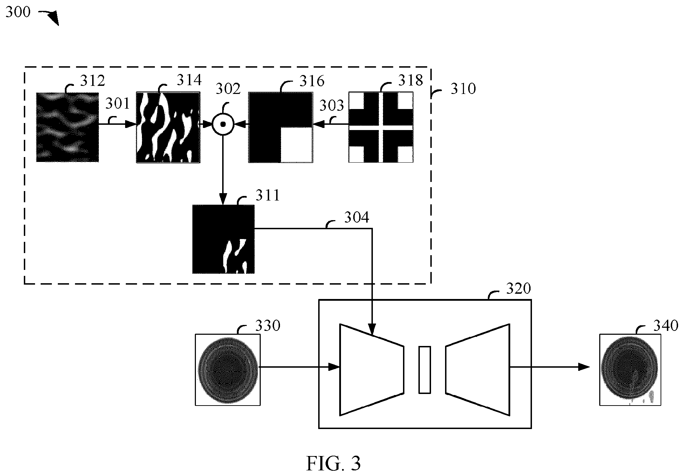

In block 204, the computing device obtains, based on the positive sample image, an anomaly labeling mask map corresponding to the positive sample image. The computing device may obtain, for each obtained positive sample image, an anomaly labeling mask map corresponding to the positive sample image. In some embodiments, the anomaly labeling mask map may be an anomaly labeling mask map that is randomly generated based on a positive sample image and in which labeling is performed for an anomaly having features such as a random size, a location, a shape, a color, or a texture. In some embodiments, the anomaly labeling mask map may have a same size as the positive sample image. A specific generation process of the anomaly labeling mask map is described in detail below with reference to FIG. 3.

In block 206, the computing device generates a forged negative sample image based on the positive sample image and the anomaly labeling mask map. In some embodiments, an anomaly region in the forged negative sample image corresponds to an anomaly labeling region in the anomaly labeling mask map. Therefore, the forged negative sample image can be generated based on the positive sample image and the anomaly labeling mask map.

The following describes specific implementations of steps 202 to 206 above in detail with reference to FIG. 3. FIG. 3 is a block diagram of a system 300 for implementing a sample processing method according to an embodiment of this disclosure. The system 300 shown in FIG. 3 may be a software system, a hardware system, or a system combining software and hardware. The system 300 may be implemented as a computing device or a part of the computing device. The computing device includes but is not limited to a desktop computer, a mobile terminal, a smart home device, a wearable device, a server, a cloud server, and the like. It may be understood that the example shown in FIG. 3 is merely an example, the system 300 shown in FIG. 3 may be changed based on an actual application scenario and a requirement of the sample processing method, and all these changes fall within the scope of this disclosure.

The system 300 shown in FIG. 3 includes a negative sample generator 320. The negative sample generator 320 is configured to receive a positive sample image 330 and an anomaly labeling mask map 311 from an anomaly labeling mask map generator 310, and generate a forged negative sample image 340 based on the positive sample image 330 and the anomaly labeling mask map 311. In an embodiment, the anomaly labeling mask map generator 310 and the negative sample generator 310 may be implemented as a same computing device or a part of the same computing device. Alternatively, the anomaly labeling mask map generator 310 and the negative sample generator 310 may be implemented in different computing devices. Therefore, in FIG. 3, the anomaly labeling mask map generator 310 is shown by a dashed line, which may indicate that the anomaly labeling mask map generator 310 and the negative sample generator 320 may be located in the same computing device or different computing devices.

In some embodiments, the negative sample generator 320 obtains the positive sample image 330. A specific obtaining manner may be understood with reference to the foregoing description in block 202. Details are not described herein again. The system 300 may obtain, based on the positive sample image 330, the anomaly labeling mask map 340 corresponding to the positive sample image 330. In some embodiments, the anomaly labeling mask map generator 310 may generate the anomaly labeling mask map 340 in real time. For example, the anomaly labeling mask map generator 310 may generate the anomaly labeling mask map 340 in real time based on the positive sample image 330 obtained by the system 300. In some embodiments, the anomaly labeling mask map generator 310 may pre-generate the anomaly labeling mask map 340 based on the positive sample image 330, and associate the pre-generated anomaly labeling mask map 340 with the corresponding positive sample image 330. After obtaining the positive sample image 330, the system may obtain a pre-generated anomaly labeling mask map 340 that is from the anomaly labeling mask map generator 310 and that is associated with the positive sample image 330. A generation occasion of the anomaly labeling mask map 340 is not limited in this disclosure.

The following describes a specific generation manner of the anomaly labeling mask map 340 with reference to FIG. 3. As shown in FIG. 3, the anomaly labeling mask map generator 310 is configured to generate the anomaly labeling mask map 340. In one embodiment, the anomaly labeling mask map generator 310 may generate a random mask map 314 based on the positive sample image. In some embodiments, the anomaly labeling mask map generator 310 may include a random noise generator (not shown), and the random noise generator may generate the random mask map 314 based on the positive sample image 330. Specifically, the random noise generator may randomly generate a corresponding pixel value for each pixel in the positive sample image 330, to obtain a numerical mask map 312. The random noise generator may perform a random binarization operation 301 on the numerical mask map 312, to generate the random mask map 314. When performing the random binarization operation, the random noise generator may set a pixel value that is the numerical mask map 312 and that is greater than a pixel threshold to a first pixel value (for example, 255), to indicate that a location of this pixel is a region with an anomaly. The random noise generator may set a pixel value that is in the numerical mask map 312 and that is not greater than the pixel threshold to a second pixel value (for example, 0), to indicate that there is no anomaly at a location of this pixel. Therefore, the random mask map 314 is generated. It may be understood that the random noise generator may further perform operations such as rotation, mirroring, and random change of image brightness, sharpness, color saturation, and exposure on the numerical mask map 312, to enhance randomness of the generated random mask map 314. In some implementations, the random noise generator may include a Perlin noise generator or a Gaussian noise generator. It may be understood that, in the system 300 in this embodiment of this disclosure, a known noise generator or a future developed noise generator may be used as the random noise generator, to generate the random mask map 314. A specific implementation of the random noise generator is not limited in this disclosure.

In addition, in some other embodiments, the random noise generator may further obtain, based on a parameter of the positive sample image 330, an image whose parameter is the same as that of the positive sample image 330, and randomly generate a corresponding pixel value for each pixel in the obtained image, to obtain the numerical mask map 312. In some embodiments, the parameter may include a size of the positive sample image. In this case, a manner in which the random noise generator generates the random mask map 314 based on the numerical mask map 312 may still be understood with reference to the foregoing description, and details are not described herein again.

In some embodiments, the anomaly labeling mask map generator 310 may obtain a location guide mask map 316 for limiting and guiding a location at which an anomaly occurs in the anomaly labeling mask map 340. In other words, the location guide mask map 316 is used to guide a location of a region in which the anomaly occurs in the anomaly labeling mask map 340. In the location guide mask map, a pixel value at a location at which an anomaly needs to be generated is set to the first pixel value (for example, 255), and a pixel value at a remaining location is set to the second pixel value (for example, 0). Correspondingly, in the location guide mask map, a region of the first pixel value is a region in which an anomaly is guided. As shown in the location guide mask map 316 in FIG. 3, a part of pixel values in the lower right corner of the location guide mask map 316 are 255, which indicates that the anomaly is guided in the lower right corner of the image. In some embodiments, the location guide mask map may be obtained from a location guide mask map library. The location guide mask map library may include a plurality of location guide mask maps, or may include a plurality of location guides in one image (as shown in a location guide map 318 in FIG. 3), so that locations of anomaly regions in the generated anomaly labeling mask map 340 can be more diversified. The location guide mask map library may include a plurality of guide locations that regularly occur in one image (as shown in FIG. 3, the plurality of guide locations occur in four corners of the location guide mask map 318), or may include a plurality of location guide maps set by a user. For example, the user may set a plurality of location guide maps based on a scenario to which an anomaly detection model is applied and based on information such as a statistical occurrence probability of an anomaly region, to form a location guide mask map library. A manner generation of the location guide mask map is not limited in this disclosure.

The anomaly labeling mask map generator 310 may randomly obtain the location guide mask map 316 from the location guide mask map 318, as shown in FIG. 3. The anomaly labeling mask map generator 310 performs point multiplication processing 302 on the random mask map 314 and the location guide mask map 316, to obtain the anomaly labeling mask map 311. It may be understood that the numerical mask map 312, the random mask map 314, the location guide mask map 316, the location guide mask map 318, and the anomaly labeling mask map 311 that are shown in FIG. 3 are for illustrative purposes only and are examples, and the sample processing method and the system in this disclosure are not limited.

The negative sample generator 320 generates the corresponding forged negative sample image 340 based on the received positive sample image 330 and anomaly labeling mask map 311. In addition, an anomaly region in the generated forged negative sample image 340 corresponds to an anomaly labeling region in the anomaly labeling mask map 311 (namely, a region in which a white pattern in the anomaly labeling mask map 311 in FIG. 3 is located). In some implementations, the negative sample generator 320 includes a generator constructed based on a neural network. Correspondingly, before the anomaly labeling mask map 311 is received by the negative sample generator 320, concatenation processing 304 may be performed on the anomaly labeling mask map 311 and the positive sample image 330 in advance, and then an image obtained through concatenation is received by the negative sample generator 320. In addition, the negative sample generator 320 generates the forged negative sample image 340 based on the received concatenated image. In some embodiments, the computing device may further pass the anomaly labeling mask map 311 through an adaptive instance normalization (Adaptive Instance Normalization, AdaIN) layer in advance. The adaptive instance normalization AdaIN layer may input the anomaly labeling mask map 311 to this layer, to obtain a mean and a standard deviation; perform standardized calculation on the positive sample image 330 and the obtained mean and standard deviation (to be specific, the mean is subtracted from each pixel value in the positive sample image 330 and then a result is divided by the standard deviation); and then input a calculation result to the negative sample generator 320. The negative sample generator 320 generates the forged negative sample image 340 based on the received computation result.

The process of generating the corresponding forged negative sample image 340 based on the positive sample image 330 and the anomaly labeling mask map 311 is described above with reference to FIG. 3. It may be understood that, because the negative sample generator 320 is a trained generator based on a neural network, the generated forged negative sample image 340 is an optimized negative sample image, that is, closer to a real negative sample image. In some embodiments, the generated forged negative sample image 340 and the corresponding anomaly labeling mask map 311 may be used as a dataset for training an anomaly detection model (the anomaly detection system 140 shown in FIG. 1). Advantageously, the anomaly detection system is trained based on the optimized negative sample image 340, so that anomaly detection accuracy of the anomaly detection system can be further improved.

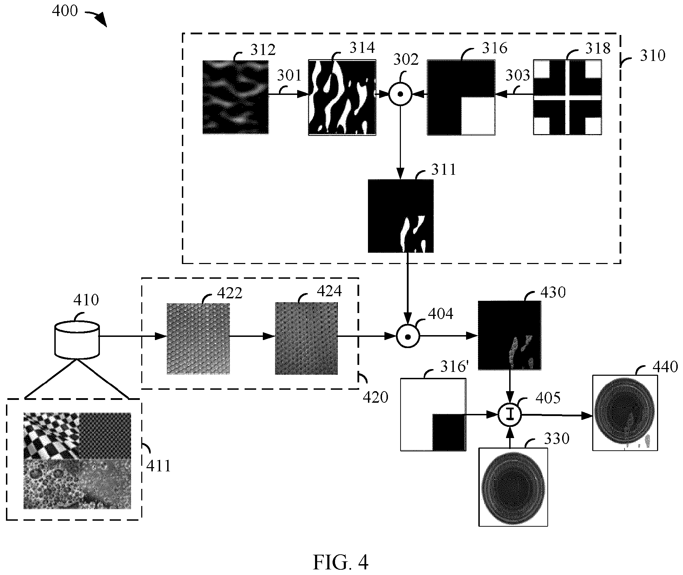

In some embodiments, in addition to that an anomaly detection system (the anomaly detection system 140 shown in FIG. 1) is trained based on the optimized forged negative sample image 340 and the corresponding anomaly labeling mask map 311, the anomaly detection system may be further initially trained based on the anomaly labeling mask map 311 and an initial forged negative sample image generated based on the anomaly labeling mask map 311. Because costs and a difficulty of generating the initial forged negative sample image are low, training costs and a training difficulty of the anomaly detection system can be reduced by initially training the anomaly detection system based on the initial forged negative sample image. The following describes, with reference to FIG. 4, a system 400 for generating an initial forged negative sample image by a computing system based on an anomaly labeling mask map 311.

FIG. 4 is a diagram of a system 400 for generating an initial forged negative sample image according to an embodiment of this disclosure. The system 400 shown in FIG. 4 may be implemented by a computing device. The system 400 shown in FIG. 4 may include the anomaly labeling mask map generator 310 shown in FIG. 3, configured to generate the anomaly labeling mask map 311. For a process of generating the anomaly labeling mask map 311 by the anomaly labeling mask map generator 310, refer to the foregoing process described with reference to FIG. 3 for understanding. For brevity, details are not described herein again.

In some embodiments, the system 400 shown in FIG. 4 further includes a texture obtaining module 420, configured to perform a texture image obtaining process. Specifically, the texture obtaining module 420 may extract a texture image 422 from a texture image library 410 randomly or in a predetermined order. The texture image library 410 may include various types of open-source texture image datasets, and the texture image library 410 may also include various types of texture image datasets created by a user. The texture image library 410 may include a plurality of texture images. FIG. 4 shows a diagram 411 of a texture image included in the texture image library 410. It may be understood that the diagram 411 of the texture image is merely an example, and the texture image library 410 may include texture images of various types, various patterns, and various quantities. This is not limited in this disclosure.

The texture obtaining module 420 may perform enhancement processing on the texture image 422 extracted from the texture image library 410, to generate an enhanced texture image 424. The enhancement processing may include but is not limited to processing manners such as rotation, cropping, color change, scaling, mirroring, translation, and random change of image brightness, sharpness, color saturation, and exposure. A quantity of different texture images may be increased by generating the enhanced texture image 424. This can improve diversity of generated forged negative sample images.

The computing device may perform point multiplication processing 404 on the enhanced texture image 424 and the anomaly labeling mask map 311, to generate a random texture image 430. As shown in FIG. 4, in the random texture image 430, a part corresponding to an anomaly region in the anomaly labeling mask map 311 is filled with texture in the enhanced texture image 424. This can ensure that there is texture data at a location at which an anomaly is guided.

Further, the computing device obtains a complementary image 316' of a location guide mask map 316. A pixel value in the complementary image 316' is complementary to a pixel value in the location guide mask map 316. To be specific, a pixel value of a pixel with a first pixel value (for example, 255) in the location guide mask map 316 is a second pixel value (for example, 0) in the complementary image 316', and a pixel value of a pixel with the second pixel value (for example, 0) in the location guide mask map 316 is the first pixel value (for example, 255) in the complementary image 316'.

The computing device performs an intersection set and complementary set combining operation 405 based on the complementary image 316', a positive sample image 330, and the random texture image 430. Specifically, in the intersection set and complementary set combining operation 405, the computing device performs pixel-level multiplication on the complementary image 316' and the positive sample image 330, to obtain a complementary positive sample image (not shown). In the complementary positive sample image, a pixel value at a location at which an anomaly needs to be guided is set to 0. The computing device performs pixel-level addition and combination on the random texture image 430 and the complementary positive sample image, to generate a primary forged negative sample image 440. Not only the generated primary forged negative sample image 440 is forged based on the normal positive sample image 330, but also a randomly forged texture feature anomaly occurs in a location region in which the anomaly needs to be guided. It can be learned that the system 400 for generating the primary forged negative sample image can obtain a large quantity of initial anomaly datasets (for example, a plurality of primary forged negative sample images including the primary forged negative sample image 440) for forging anomalies of different locations, sizes, shapes, colors, and textures, and corresponding anomaly labeling sets (anomaly labeling mask maps that respectively correspond to the plurality of primary forged negative sample images and that include the anomaly labeling mask map 311). The initial anomaly datasets and the anomaly labeling sets may be used for initial training on an anomaly detection system (the anomaly detection system 140 shown in FIG. 1).

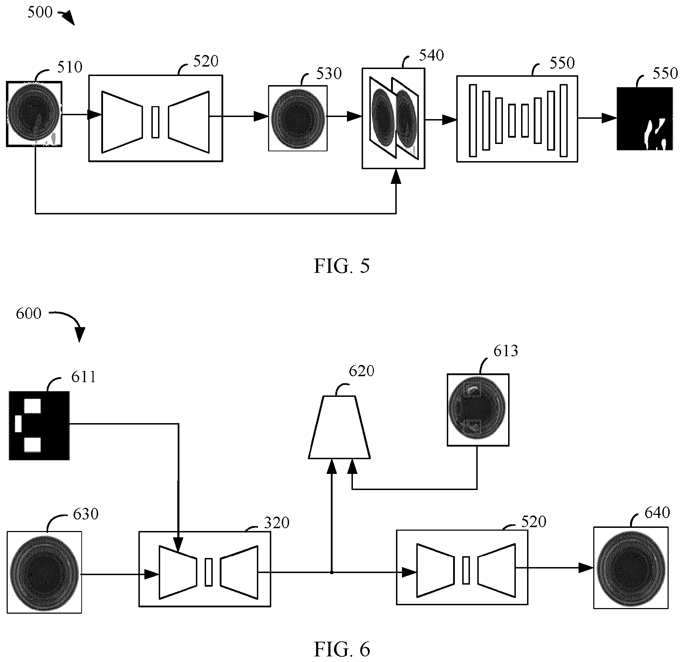

The system and process for generating the optimized forged negative sample image and the primary negative sample image based on the positive sample image and the anomaly labeling mask map are described above with reference to FIG. 3 and FIG. 4. Therefore, the computing device or another training device can construct the initial anomaly dataset, the anomaly labeling set, and an optimized forged negative sample image training set. The computing device or the another training device may perform initial training on the anomaly detection system by using the initial anomaly dataset and the anomaly labeling set, and then retrain the anomaly detection system by using the anomaly labeling set and the optimized forged negative sample image training set, to obtain a trained anomaly detection system for detecting an anomaly in a to-be-detected image. In addition, the anomaly detection system obtained according to the foregoing training process has a better generalization capability and detection accuracy. In some embodiments, for training of the anomaly detection system, a loss function may be solved based on gradient descent. The computing device or the training device may alternatively construct a loss function in another manner and solve the loss function in various manners, to train the anomaly detection system. A specific training process is not limited in this disclosure. The following describes, with reference to FIG. 5, a process in which a trained anomaly detection system detects the anomaly in the to-be-detected image.

FIG. 5 is a diagram of an anomaly detection system 500 according to an embodiment of this disclosure. The anomaly detection model 500 in FIG. 5 may be similar to the anomaly detection system 140 in FIG. 1, and is configured to automatically detect an anomaly in a to-be-detected image. As shown in FIG. 5, the anomaly detection system 500 may include a positive sample generator 530, a stitcher 540, and a labeler 550. In some embodiments, the positive sample generator 520 receives the to-be-detected image 510, and generates an intermediate positive sample image 530 corresponding to the detected image, as shown in FIG. 5. In some embodiments, the intermediate positive sample image 530 may include an anomaly-free image corresponding to the to-be-detected image 510. It may be understood that when there is no anomaly in the to-be-detected image, the intermediate positive sample image 530 is the same as the to-be-detected image; or when there is an anomaly in the to-be-detected image, the intermediate positive sample image 530 is a normal image obtained when there is no anomaly in the to-be-detected image.

The intermediate positive sample image 530 generated by the positive sample generator 520 and the to-be-detected image 510 received by the system 500 are received by the stitcher 540. The stitcher 540 performs stitching processing on the intermediate positive sample image 530 and the to-be-detected image 510, to generate a stitched image (not shown). In some embodiments, stitching processing may include concatenation. To be specific, the stitcher 540 concatenates the intermediate positive sample image 530 and the to-be-detected image 510, thereby generating a stitched image. The stitched image is received by the labeler 550. The labeler 550 may perform anomaly detection on the received stitched image, and label a detected anomaly region, to generate an anomaly labeling map, as shown in 550 in FIG. 5. A labeling region in the anomaly labeling map 550 represents a region in which an anomaly in the to-be-detected image 510 is located, for example, a white region in the anomaly labeling map 550.

In some embodiments, the anomaly detection system 500 may be configured to: detect whether there is an anomaly in the to-be-detected image 510, and if there is the anomaly in the to-be-detected image 510, detect the anomaly and label the anomaly, to generate an anomaly labeling map. Correspondingly, the anomaly detection model 500 may be further used as a labeling system for automatically labeling negative sample images of various types, to generate anomaly labeling mask maps that correspond to the negative sample images and that are used to train artificial intelligence models of various types. This shortens manual labeling time and reduces manual labeling costs. A process in which the anomaly detection model 500 labels a negative sample image when being used as the labeling system is similar to a process of labeling the anomaly in the to-be-detected image. For example, the positive sample generator 520 receives a to-be-labeled negative sample image, and generates an intermediate positive sample image corresponding to the to-be-labeled negative sample image. The intermediate positive sample image generated by the positive sample generator 520 and the to-be-labeled negative sample image received by the system 500 are received by the stitcher 540. The stitcher 540 performs stitching processing on the intermediate positive sample image and the to-be-labeled negative sample image, to generate a stitched image (not shown). In some embodiments, stitching processing may include concatenation. To be specific, the stitcher 540 concatenates the intermediate positive sample image and the to-be-labeled negative sample image, thereby generating the stitched image. The stitched image is received by the labeler 550. The labeler 550 may perform anomaly detection on the received stitched image, and label the detected anomaly region, to generate the anomaly labeling map. Therefore, the anomaly detection system 500 can be implemented as the labeling system for labeling the negative sample image. This shortens manual labeling time and reduces manual labeling costs.

The labeler 550 in the anomaly detection system 500 in FIG. 5 may include a model based on a neural network, such as VGG16, VGG19, an auto-encoder network, or a U-Net. The labeler 550 in the anomaly detection system 500 may be initially trained by using the initial anomaly dataset and the anomaly labeling set that are generated by the system 400 in FIG. 4. The labeler 550 is then retrained by using the anomaly labeling set and the optimized forged negative sample image training set generated by the system 300 in FIG. 3. In some embodiments, the labeler 550 may be trained together with the positive sample generator 520. In some other embodiments, when the anomaly detection system 500 is retrained, only the labeler 550 may be trained. A specific process of training the anomaly detection system 500 is not limited in this disclosure.

In some embodiments, the positive sample generator 520 in the anomaly detection system 500 may be pre-trained. In addition, in some embodiments, to improve anomaly detection accuracy and a training difficulty of the anomaly detection model 500, the positive sample generator 520 may be trained together with the negative sample generator 320 in FIG. 3. The following describes a training process 600 of the positive sample generator 520 and the negative sample generator 320 with reference to FIG. 6.

FIG. 6 is a diagram of a training process 600 of training a positive sample generator and a negative sample generator according to an embodiment of this disclosure. The training process 600 in FIG. 6 may be performed by a computing device or a training device. In some embodiments, a dataset for training the negative sample generator 320 and the positive sample generator 520 may include the following training datasets: a positive sample training image set, a negative sample training image set, and an anomaly labeling mask training map set, where an anomaly labeling mask training map in the anomaly labeling mask training map set separately corresponds to a negative sample training image in the negative sample training image set. In some embodiments, all negative sample training images in the negative sample training image set are collected real negative sample images. Therefore, training is performed based on the real negative sample image, so that the trained negative sample generator 320 can generate an optimized forged negative sample image closer to the real negative sample, as described above with reference to FIG. 3.

With reference to FIG. 6, the following describes the training process 600 of the positive sample generator 520 and the negative sample generator 320 by using a process of performing training once based on one image in a training dataset. It may be understood that the foregoing training process 600 is applicable to a process of training the positive sample generator 520 and the negative sample generator 320 based on each training image in the training dataset.

The negative sample generator 320 receives an anomaly labeling mask training map 611 and a positive sample training image 630. The negative sample generator 320 may generate, based on the received anomaly labeling mask training map 611 and positive sample training image 630, a negative sample image output through training (not shown). In some embodiments, the negative sample generator 320 may receive an image obtained through channel-level concatenation of the anomaly labeling mask training map 611 and the positive sample training image 630, and generate, based on the image obtained through concatenation, the negative sample image output through training. In some other embodiments, the computing device may pass the anomaly labeling mask training map 611 through an adaptive instance normalization (Adaptive Instance Normalization, AdaIN) layer. The adaptive instance normalization AdaIN layer may input the anomaly labeling mask training map 611 to this layer, to obtain a mean and a standard deviation; perform standardized calculation on the positive sample training image 630 and the obtained mean and standard deviation (to be specific, the mean is subtracted from each pixel value in data of the positive sample training image 630 and then a result is divided by the standard deviation); and then input calculation result data to the negative sample generator 320. The negative sample generator 320 outputs, based on the received result data, the negative sample image output through training.

In some embodiments, the negative sample image output through training that is generated by the negative sample generator 320 is input to a discriminator 620, and the discriminator 620 further receives a negative sample training image 613. As shown above, the negative sample training image 613 corresponds to the anomaly labeling mask training map 611. In other words, as shown in FIG. 6, a white region labeled in the anomaly labeling mask training map 611 corresponds to a region of an anomaly in the negative sample training image 613. The discriminator 620 may distinguish, from the real negative sample training image 613, the negative sample image output through training, to distinguish whether the negative sample image output through training is a real negative sample. Therefore, the negative sample generator 320 and the discriminator 620 are in a generative adversarial network. The negative sample generator 320 generates, as far as possible, forged negative samples that can "deceive" the discriminator 620, while the discriminator 620 distinguishes the forged negative samples from the real negative sample as far as possible. In this way, after adversarial training, the negative sample generator 320 generates an optimized forged negative sample closer to the real negative sample.

In some embodiments, when the discriminator 620 can distinguish the negative sample training image 613 from the negative sample image output through training that is generated by the negative sample generator 320, a backpropagation loss is given to the negative sample generator 320, to optimize a forgery capability of the negative sample generator 320. When the discriminator 620 cannot distinguish the negative sample training image 613 from the negative sample image output through training that is generated by the negative sample generator 320, a backpropagation loss is given to the discriminator 620, to optimize a discriminating capability of the discriminator. In some embodiments, the negative sample generator 320 and the discriminator 620 may be in a generative adversarial network such as a GAN network, and a backpropagation loss for the generative adversarial network may be an adversarial loss, in other words, the discriminator 620 determines an adversarial loss function *Lₗₒₛₛ₁.*

As shown in FIG. 6, the positive sample generator 520 receives the negative sample image output through training that is output by the negative sample generator 320, and generates, based on the received training output negative sample image, a positive sample image output through training 640. The computing device may construct a reconstruction loss function *Lₗₒₛₛ₂* based on the positive sample image output through training 640 that is generated by the positive sample generator 520 and the positive sample training image 630. In some embodiments, the reconstruction loss function *Lₗₒₛₛ₂* may include any loss function such as a least absolute error loss function, a least square error loss function, or a structural similarity loss. This is not limited in this disclosure.

In some embodiments, the computing device may train the negative sample generator 320, the discriminator 620, and the positive sample generator 520 based on the adversarial loss function *Lₗₒₛₛ₁* and the reconstruction loss function *Lₗₒₛₛ₂.* For example, the computing device may adjust a parameter of the adversarial network based on the adversarial loss function *Lₗₒₛₛ₁,* to train the negative sample generator 320 and the discriminator 620. The computing device may adjust a parameter of the positive sample generator 520 based on the reconstruction loss function *Lₗₒₛₛ₂,* to train the positive sample generator 520. The computing device may further adjust parameters of the negative sample generator 320, the discriminator 620, and the positive sample generator 520 based on a weight sum of the adversarial loss function *Lₗₒₛₛ₁* and the reconstruction loss function *Lₗₒₛₛ₂,* to train the negative sample generator 320, the discriminator 620, and the positive sample generator 520.

The trained positive sample generator 520 and the trained negative sample generator 320 may be obtained according to the training process described with reference to FIG. 6. The computing device may use the trained positive sample generator 520 in the anomaly detection system 500, shown in FIG. 5, that may be configured to detect and label an anomaly in a to-be-detected image and may be further configured to automatically label a negative sample image. The computing device may use the trained negative sample generator 320 in the system 300, shown in FIG. 3, that is configured to generate an optimized forged negative sample image based on a positive sample image, to provide more negative sample images for training a required artificial intelligence model, so as to more accurately detect the anomaly.

Advantageously, the sample processing method and the anomaly detection model in embodiments of this disclosure are applicable to various scenarios with scarce negative samples, for example, the automatic detection field such as medical diagnosis, to detect an anomaly. According to the sample processing method in embodiments of this disclosure, a forged negative sample image is generated based on a positive sample image and an anomaly labeling mask map. Therefore, sufficient training sample datasets can be provided for training an artificial intelligence model (for example, the anomaly detection system 140 shown in FIG. 1) used to perform an anomaly detection task in a scenario with scarce samples, to improve accuracy of anomaly detection performed by the artificial intelligence model, resolve an overfitting problem caused by sample scarcity, and further effectively improve a generalization capability of the model.

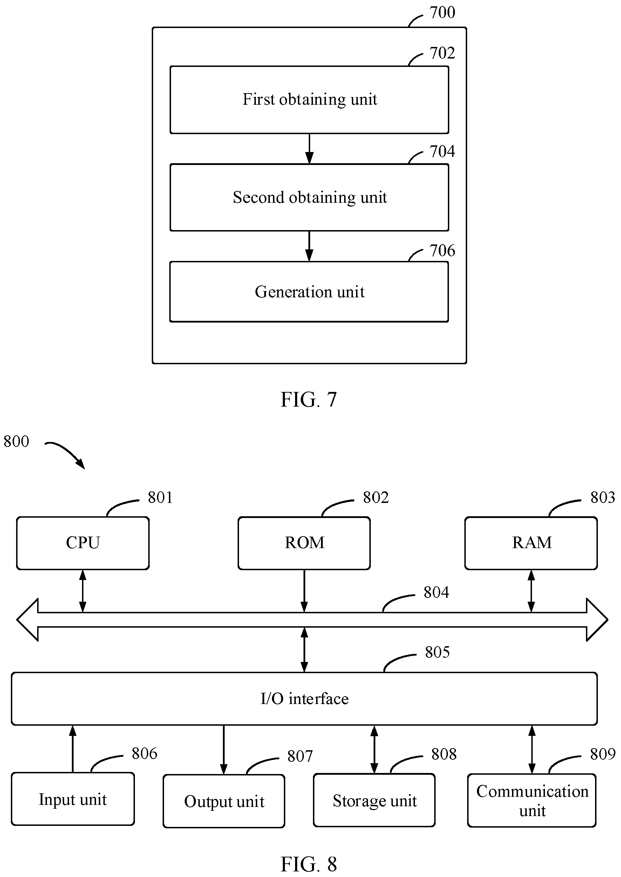

FIG. 7 is a block diagram of a sample processing apparatus 700 according to an embodiment of this disclosure. The sample processing apparatus 700 may be implemented by software, hardware, or a combination thereof. In some embodiments, the apparatus 700 may be implemented as a software apparatus, a hardware apparatus, or an apparatus combining hardware and software.

The sample processing apparatus 700 may include a first obtaining unit 702, a second obtaining unit 704, and a generation unit 706. In some embodiments, the first obtaining unit 702 may be configured to obtain a positive sample image. The second obtaining unit 704 may be configured to obtain, based on the positive sample image, an anomaly labeling mask map corresponding to the positive sample image. The generation unit 706 may be configured to generate a forged negative sample image based on the positive sample image and the anomaly labeling mask map, where an anomaly region in the forged negative sample image corresponds to an anomaly labeling region in the anomaly labeling mask map.

Therefore, the sample processing apparatus provided in the second aspect of this disclosure generates the forged negative sample image based on the positive sample image and the anomaly labeling mask map. Therefore, sufficient sample datasets can be provided for training an artificial intelligence model (for example, an anomaly detection model) used to perform an anomaly detection task in a scenario with scarce samples, to improve accuracy of anomaly detection performed by the artificial intelligence model, and resolve an overfitting problem caused by sample scarcity.

In some embodiments, the sample processing apparatus 700 may further include a first training unit. The first training unit may be configured to train an anomaly detection system based on the generated forged negative sample image and the corresponding anomaly labeling mask map.

In some embodiments, the anomaly detection system may detect and label an anomaly in a to-be-detected image.

In some embodiments, that the anomaly detection system detects and labels the anomaly in the to-be-detected image may include: receiving the to-be-detected image; generating, by a positive sample generator in the anomaly detection system, an intermediate positive sample image based on the received to-be-detected image; stitching the to-be-detected image and the intermediate positive sample image, to generate a stitched image; and generating, by a labeler based on the stitched image, an anomaly labeling map corresponding to the to-be-detected image.

In some embodiments, the forged negative sample image may be generated by a negative sample generator, and the sample processing apparatus further includes a second training unit, configured to train the negative sample generator and the positive sample generator based on a positive sample training image, a negative sample training image, and an anomaly labeling mask training map.

In some embodiments, the second training unit may include: a first obtaining subunit, configured to obtain a negative sample image output through training that is generated by the negative sample generator based on the positive sample training image and the anomaly labeling mask training map; a second obtaining subunit, configured to obtain a positive sample image output through training that is generated by the positive sample generator based on the negative sample image output through training; a first determining subunit, configured to determine a reconstruction loss function based on the positive sample training image and the positive sample image output through training; and a second determining subunit, configured to determine an adversarial loss function based on the negative sample training image and the negative sample image output through training; and a training subunit, configured to train the negative sample generator and the positive sample generator based on the reconstruction loss function and the adversarial loss function.

In some embodiments of the second aspect, the second determining subunit may be configured to: input the negative sample training image and the negative sample image output through training to a discriminator; and determine, by the discriminator, the adversarial loss function.

In some embodiments, the training subunit may be configured to train the negative sample generator, the positive sample generator, and the discriminator based on the reconstruction loss function and the adversarial loss function.

In some embodiments, the second obtaining unit may include: a random noise generator, configured to generate a random mask map based on the positive sample image; a third obtaining subunit, configured to obtain a location guide mask map; and a fourth obtaining subunit, configured to perform point multiplication processing on the random mask map and the location guide mask map, to obtain the anomaly labeling mask map.

In some embodiments, the random noise generator may include: a fifth obtaining subunit, configured to randomly generate a corresponding pixel value for at least one pixel in the positive sample image, to obtain a numerical mask map; a first setting subunit, configured to set a pixel value that is in the numerical mask map and that is greater than a pixel threshold to a first pixel value; a second setting subunit, configured to set a pixel value that is in the numerical mask map and that is less than the pixel threshold to a second pixel value; and a generation subunit, configured to generate the random mask map based on the numerical mask map with an updated pixel value.

In some embodiments, the random noise generator may include a Perlin noise generator or a Gaussian noise generator.

In some embodiments, in the location guide mask map, a region including a first pixel value may be a region in which an anomaly is guided.

In some embodiments, the sample processing apparatus 700 may further include: a texture image obtaining unit, configured to obtain a texture image; a random texture image obtaining unit, configured to perform point multiplication processing on the anomaly labeling mask map and the texture image, to obtain a random texture image; a complementary image obtaining unit, configured to obtain a complementary image of a location guide map; an updated positive sample image obtaining unit, configured to perform point multiplication processing on the complementary image and the positive sample image, to obtain an updated positive sample image; and a primary forged negative sample obtaining unit, configured to perform addition processing on the random texture image and the updated positive sample image, to obtain a primary forged negative sample image.

In some embodiments, the texture image obtaining unit may be configured to: obtain an initial texture image; and perform enhancement processing on the initial texture image, to generate the texture image.

In embodiments of this disclosure, division into units is an example, and is merely logical function division. During actual implementation, there may be another division manner. In addition, functional units in embodiments of this disclosure may be integrated into one processor, each of the units may exist alone physically, or two or more units may be integrated into one unit. The integrated unit may be implemented in a form of hardware, or may be implemented in a form of a software functional unit.

The apparatus 700 shown in FIG. 7 can be configured to implement the foregoing sample processing processes shown with reference to FIG. 2 to FIG. 6.

FIG. 8 is a block diagram of an example device 800 that may be used to implement an embodiment of this disclosure. The device 800 may be implemented as or included in the manufacturing and processing center 110 shown in FIG. 1 or another computing network device.

As shown in the figure, the device 800 includes a central processing unit (Central Processing Unit, CPU) 1101, a read-only memory (Read-Only Memory, ROM) 802, and a random access memory (Random Access Memory, RAM) 803. The CPU 1101 may perform various proper actions and processing according to computer program instructions stored in the RAM 802 and/or the RAM 803 or computer program instructions loaded from a storage unit 808 to the ROM 802 and/or the RAM 803. The ROM 802 and/or the RAM 803 may further store various programs and data that are required for an operation of the device 800. The CPU 801 is connected to the ROM 802 and/or the RAM 803 through a bus 804. An input/output (Input/Output, I/O) interface 805 is also connected to the bus 804.

A plurality of components in the device 800 are connected to the I/O interface 805, and include: an input unit 806, for example, a keyboard or a mouse; an output unit 807, for example, any type of display or speaker; the storage unit 808, for example, a magnetic disk or an optical disc; and a communication unit 809, for example, a network interface card, a modem, or a wireless communication transceiver. The communication unit 809 allows the device 800 to exchange information/data with another device over a computer network, for example, the Internet, and/or various telecommunication networks.

The CPU 801 may be any general-purpose and/or dedicated processing component having processing and computing capabilities. Some examples that may be implemented include but are not limited to a graphics processing unit (Graphics Processing Unit, GPU), any dedicated artificial intelligence (Artificial Intelligence, AI) computing chip, any computing unit that runs a machine learning model algorithm, a digital signal processor (Digital Signal Processor, DSP), and any proper processor, controller, microcontroller, and the like. Correspondingly, the CPU 801 may be referred to as a computing unit. The CPU 801 performs the methods and processing described above. For example, in some embodiments, the process described above may be implemented as a computer software program, and the computer software program is tangibly included in a computer-readable medium, for example, the storage unit 808. In some embodiments, some or all of the computer programs may be loaded to and/or installed on the device 800 through the ROM 802 and/or the RAM 803 and/or the communication unit 809. When the computer program is loaded to the ROM 802 and/or the RAM 803 and executed by the CPU 801, one or more steps of the process described above may be performed. Alternatively, in another embodiment, the CPU 801 may be configured to perform the process described above in any other proper manner (for example, through firmware).

For example, the device 800 shown in FIG. 8 may be implemented as a computing device, or may be implemented as a chip or a chip system in the computing device. This is not limited in embodiments of this disclosure.

An embodiment of this disclosure further provides a chip. The chip may include an input interface, an output interface, and a processing circuit. In this embodiment of this disclosure, the input interface and the output interface may complete signaling or data exchange, and the processing circuit may complete generation and processing of signaling or data information.

An embodiment of this disclosure further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this disclosure further provides a processor, configured to be coupled to a memory. The memory stores instructions. When the processor runs the instructions, the processor is enabled to perform the method and the function in any one of the foregoing embodiments.

An embodiment of this disclosure further provides a computer program product including instructions. When the computer program product runs on a computer, the computer is enabled to perform the method and the function in any one of the foregoing embodiments.

An embodiment of this disclosure further provides a computer-readable storage medium. The computer-readable storage medium stores computer instructions. When a processor runs the instructions, the processor is enabled to perform the method and the function in any one of the foregoing embodiments.

Generally, various embodiments of this disclosure may be implemented by hardware or a dedicated circuit, software, logic, or any combination thereof. Some aspects may be implemented by hardware, and other aspects may be implemented by firmware or software, and may be performed by a controller, a microprocessor, or another computing device. Although various aspects of embodiments of this disclosure are shown and described as block diagrams, flowcharts, or some other figures, it should be understood that the blocks, apparatuses, systems, technologies, or methods described in this specification may be implemented as, for example, nonlimiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a real or virtual target processor, to perform the process/method as described above with reference to accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed totally on a computer, partially on a computer, as a standalone software package, partially on a computer and partially on a remote computer, or entirely on a remote computer or server.

In the context of this disclosure, the computer program code or related data may be carried in any proper carrier, so that the device, the apparatus, or the processor can perform various processing and operations described above. For example, the carrier includes a signal, a computer-readable medium, and the like. For example, the signal may include propagating signals in electrical, optical, radio, sound, or other forms, such as a carrier and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk drive, a random access memory (RAM), a read-only memory (ROM), an erasable programmable read-only memory (EPROM or a flash memory), an optical storage device, a magnetic storage device, or any suitable combination thereof.

In addition, although the operations of the method in this disclosure are described in a particular order in the accompanying drawings, this does not require or imply that these operations need to be performed in the particular order, or that all the operations shown need to be performed to achieve the desired results. Instead, an execution order of the steps depicted in the flowchart may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

Various implementations of this disclosure have been described above. The foregoing descriptions are example descriptions rather than exhaustive descriptions, and are not limited to the disclosed implementations. Many modifications and changes are apparent to a person of ordinary skill in the art without departing from the scope of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A sample processing method, comprising:
obtaining a positive sample image;
obtaining, based on the positive sample image, an anomaly labeling mask map corresponding to the positive sample image; and
generating a forged negative sample image based on the positive sample image and the anomaly labeling mask map, wherein
an anomaly region in the forged negative sample image corresponds to an anomaly labeling region in the anomaly labeling mask map.

2. The method according to claim 1, further comprising:
training an anomaly detection system based on the generated forged negative sample image and the corresponding anomaly labeling mask map.

3. The method according to claim 2, wherein the anomaly detection system is configured to detect and label an anomaly in a to-be-detected image.

4. The method according to claim 3, wherein detecting and labeling the anomaly in the to-be-detected image comprise:
receiving the to-be-detected image;
generating, by a positive sample generator in the anomaly detection system, an intermediate positive sample image based on the received to-be-detected image;
stitching the to-be-detected image and the intermediate positive sample image, to generate a stitched image; and
generating, by a labeler based on the stitched image, an anomaly labeling map corresponding to the to-be-detected image.

5. The method according to claim 4, wherein the forged negative sample image is generated by a negative sample generator, and both the negative sample generator and the positive sample generator are obtained through training based on a positive sample training image, a negative sample training image, and an anomaly labeling mask training map.

6. The method according to claim 5, wherein the negative sample generator and the positive sample generator are obtained through training in the following manners:
generating, by the negative sample generator based on the positive sample training image and the anomaly labeling mask training map, a negative sample image output through training;
generating, by the positive sample generator based on the negative sample image output through training, a positive sample image output through training;
determining a reconstruction loss function based on the positive sample training image and the positive sample image output through training;
determining an adversarial loss function based on the negative sample training image and the negative sample image output through training; and
training the negative sample generator and the positive sample generator based on the reconstruction loss function and the adversarial loss function.

7. The method according to claim 6, wherein the determining an adversarial loss function comprises:
inputting the negative sample training image and the negative sample image output through training to a discriminator; and
determining, by the discriminator, the adversarial loss function.

8. The method according to claim 7, wherein the training the negative sample generator and the positive sample generator comprises:
training the negative sample generator, the positive sample generator, and the discriminator based on the reconstruction loss function and the adversarial loss function.

9. The method according to claim 1, wherein the obtaining an anomaly labeling mask map comprises:
generating, by a random noise generator, a random mask map based on the positive sample image;
obtaining a location guide mask map; and
performing point multiplication processing on the random mask map and the location guide mask map, to obtain the anomaly labeling mask map.

10. The method according to claim 9, wherein the generating, by a random noise generator, a random mask map comprises:
randomly generating a corresponding pixel value for at least one pixel in the positive sample image, to obtain a numerical mask map;
setting a pixel value that is in the numerical mask map and that is greater than a pixel threshold to a first pixel value;
setting a pixel value that is in the numerical mask map and that is less than the pixel threshold to a second pixel value; and
generating the random mask map based on the numerical mask map with an updated pixel value.

11. The method according to claim 9, wherein the random noise generator comprises a Perlin noise generator or a Gaussian noise generator.

12. The method according to claim 9, wherein in the location guide mask map, a region comprising a first pixel value is a region in which an anomaly is guided.

13. The method according to claim 9, further comprising:
obtaining a texture image;
performing point multiplication processing on the anomaly labeling mask map and the texture image to obtain a random texture image;
obtaining a complementary image of the location guide mask map;
performing point multiplication processing on the complementary image and the positive sample image, to obtain an updated positive sample image; and
performing addition processing on the random texture image and the updated positive sample image, to obtain a primary forged negative sample image.

14. The method according to claim 13, wherein the obtaining a texture image comprises:
obtaining an initial texture image; and
performing enhancement processing on the initial texture image, to generate the texture image.

15. A sample processing apparatus, comprising:
a first obtaining unit, configured to obtain a positive sample image;
a second obtaining unit, configured to obtain, based on the positive sample image, an anomaly labeling mask map corresponding to the positive sample image; and
a generation unit, configured to generate a forged negative sample image based on the positive sample image and the anomaly labeling mask map, wherein
an anomaly region in the forged negative sample image corresponds to an anomaly labeling region in the anomaly labeling mask map.

16. A computing device, comprising a processor and a memory, wherein the memory stores a computer program, and when the processor reads and executes the computer program, the computing device is enabled to perform the method according to any one of claims 1 to 14.

17. A computer-readable storage medium, wherein the computer-readable storage medium stores a computer program, and when the computer program is executed by a processor, the method according to any one of claims 1 to 14 is implemented.
